# EUROPÄISCHE PATENTANMELDUNG

(11) **EP 2 177 891 A2**
(43) Veröffentlichungstag der Anmeldung: **21.04.2010**
(21) Anmeldenummer: 09450192.1
(22) Anmeldetag: 12.10.2009
(51) Int. Cl.: G01M 13/04

(54) **Vorrichtung zum Überwachen der Wälzlager von rotierenden Maschinen einer Produktionsanlage**

(30) Priorität: 14.10.2008 AT 16012008
(71) Anmelder: Chemserv Industrie Service GmbH, 4021 Linz (AT)
(72) Erfinder: Meyer, Erich, 4040 Linz (AT)
(74) Vertreter: Hübscher, Helmut

(57) **Zusammenfassung**

Es wird eine Vorrichtung zum Überwachen der Wälzlager von rotierenden Maschinen (15) einer Produktionsanlage, welche Maschinen (15) ein Gehäuse zur Lagerung eines Rotors umfassen, mit den einzelnen Maschinen (15) zugehörigen Überwachungseinrichtungen (1), die jeweils einen Schwingungsaufnehmer (3), eine Sendestufe (6) für die durch den Schwingungsaufnehmer (3) erfassten Messdaten sowie eine über eine Empfangsstufe ansteuerbare Steuerschaltung (4) zur Beaufschlagung der Sendestufe (6) mit den Messdaten aufweisen, und mit einer Auswerteschaltung (2) beschrieben, die mit einer Sendestufe zur drahtlosen Übertragung von Steuersignalen an die ausgewählten Überwachungseinrichtungen (1) zum Senden der Messdaten versehen und an eine Empfangsstufe für die über eine drahtlose Übertragungsstrecke von den Überwachungseinrichtungen (1) gesendeten Messdaten angeschlossen ist. Um vorteilhafte Überwachungsbedingungen zu schaffen, wird vorgeschlagen, dass die Überwachungseinrichtungen (1) von den Maschinen (15) gesonderte Baueinheiten mit einem kraftschlüssig am jeweiligen Maschinengehäuse befestigbaren Gehäuse (12) bilden, an dem sich der Schwingungsaufnehmer (3) starr abstützt, und dass die drahtlose Übertragungsstrecke Teil eines Funknetzes (8) ist, über das die Auswerteschaltung (2) gegebenenfalls mit Abfrageeinheiten (9) in Verbindung steht.

## Beschreibung

Die Erfindung bezieht sich auf eine Vorrichtung zum Überwachen der Wälzlager von rotierenden Maschinen einer Produktionsanlage, welche Maschinen ein Gehäuse zur Lagerung eines Rotors umfassen, mit den einzelnen Maschinen zugehörigen Überwachungseinrichtungen, die jeweils einen Schwingungsaufnehmer, eine Sendestufe für die durch den Schwingungsaufnehmer erfassten Messdaten sowie eine über eine Empfangsstufe ansteuerbare Steuerschaltung zur Beaufschlagung der Sendestufe mit den Messdaten aufweisen, und mit einer Auswerteschaltung, die mit einer Sendestufe zur drahtlosen Übertragung von Steuersignalen an die ausgewählten Überwachungseinrichtungen zum Senden der Messdaten versehen und an eine Empfangsstufe für die über eine drahtlose Übertragungsstrecke von den Überwachungseinrichtungen gesendeten Messdaten angeschlossen ist.

Da bei Elektromotoren und anderen Rotoren von Maschinen im Wesentlichen nur die für die Lagerung der Rotoren eingesetzten Wälzlager einem Verschleiß unterworfen sind, wird die Standzeit dieser Maschinen durch die Wälzlager bestimmt. Zur Beurteilung der Betriebssicherheit einer Produktionsanlage mit rotierenden Maschinen ist daher die Abschätzung der jeweils verbleibenden Laufzeit der die Rotoren aufnehmenden Wälzlager von entscheidender Bedeutung. Bekannte Vorrichtungen zur Überwachung der Wälzlager solcher Maschinen nützen den Einfluss des sich mit zunehmendem Verschleiß der Wälzlager ändernden Schwingungsverhaltens aus. Es werden daher Überwachungseinrichtungen mit Schwingungsaufnehmern eingesetzt, deren Messsignale in einer Auswerteschaltung mit vorgegebenen, auf die Laufzeit der Wälzlager bezogenen Schwingungsverläufen in Bezug gesetzt werden, um anhand des jeweils erfassten Schwingungsverhaltens einen allfälligen Lagerwechsel zeitgerecht vornehmen zu können. Zur Auswertung der von den Schwingungsaufnehmern der einzelnen Maschinen erfassten Schwingungen ist es bekannt (JP 2005-164315 A), eine allen Überwachungseinrichtungen gemeinsame Auswerteschaltung mit drahtlosen Übertragungsstrecken von den einzelnen Überwachungseinrichtungen zur zentralen Auswerteschaltung vorzusehen, sodass die von den Schwingungsaufnehmern der Überwachungseinrichtungen erfassten Messdaten mit Hilfe von Sendestufen zyklisch an die mit einer entsprechenden Empfangsstufe ausgerüsteten Auswerteschaltung übertragen werden können. Die durch geeignete Programme ausgewerteten Messdaten der Überwachungseinrichtungen erlauben eine laufende Überwachung der Wälzlager der einzelnen Maschinen, allerdings nur mit einem erheblichen Steuerungsaufwand, was diese bekannte Vorrichtung für Produktionsanlagen mit einer Vielzahl von zu überwachenden Maschinen ungeeignet macht.

Darüber hinaus ist es bekannt (US 2003/0030565 A1), die Messwerte von Schwingungs- und Temperaturaufnehmern drahtlos an eine gemeinsame Auswerteschaltung zu übertragen, wenn diese Messdaten von der Auswerteschaltung abgefragt werden. Zu diesem Zweck ist der Auswerteschaltung eine Sendestufe für Steuersignale zugeordnet, die mit Hilfe entsprechender Empfangsstufen in den einzelnen Überwachungseinrichtungen empfangen werden können, um die jeweils letzten Messdaten der Sendestufe der angewählten Überwachungseinrichtung zuleiten zu können. Die drahtlosen Schwingungs- und Temperaturaufnehmer können wegen des Fehlens von Leitungsverbindungen zur Signalübertragung an bewegten Konstruktionsteilen, beispielsweise an Spindeln von Werkzeugmaschinen, angebracht werden, was jedoch wegen der im Allgemeinen eine Abschirmung gegenüber der Signalübertragung bildenden Gehäuse Auswerteschaltungen innerhalb der Gehäuse erfordert. Werden die Schwingungs- und Temperaturaufnehmer zur Überwachung der Wälzlagersätze von Radachsen eingesetzt, indem sie den die Wälzlager aufnehmenden Lagerkörpern zugeordnet werden, so ergibt sich ein erheblicher Konstruktionsaufwand, weil zunächst die Messdaten von an den Radachsen vorgesehenen Schwingungsaufnehmern zu einer Relay-Station übertragen werden müssen, um von dieser Relay-Station, die das die Radachsen jeweils aufnehmende Gehäuse durchsetzt, an die gemeinsame Auswerteschaltung weitergeleitet zu werden.

Der Erfindung liegt somit die Aufgabe zugrunde, eine Überwachungseinrichtung der Wälzlager von rotierenden Maschinen einer Produktionsanlage der eingangs geschilderten Art so auszugestalten, dass mit einfachen Mitteln die verbleibende Lebensdauer der Wälzlager abgeschätzt werden kann, ohne in die zu überwachenden Maschinen oder die Produktionsanlage konstruktiv eingreifen zu müssen.

Die Erfindung löst die gestellte Aufgabe dadurch, dass die Überwachungseinrichtungen von den Maschinen gesonderte Baueinheiten mit einem kraftschlüssig am jeweiligen Maschinengehäuse befestigbaren Gehäuse bilden, an dem sich der Schwingungsaufnehmer starr abstützt, und dass die drahtlose Übertragungsstrecke Teil eines Funknetzes ist, über das die Auswerteschaltung gegebenenfalls mit Abfrageeinheiten in Verbindung steht.

Da zufolge dieser Maßnahmen die Überwachungseinrichtungen gesonderte Baueinheiten bilden, brauchen die Gehäuse dieser Überwachungseinrichtungen lediglich kraftschlüssig mit den jeweiligen Gehäusen der zu überwachenden Maschinen verbunden zu werden, was vorteilhaft durch ein Kleben oder Klemmen erfolgt, um an den Maschinengehäusen keine konstruktiven Veränderungen vornehmen zu müssen. Wegen der starren Abstützung der Schwingungsaufnehmer in Gehäusen der Überwachungseinrichtungen werden die Schwingungen der Maschinengehäuse zunächst über die kraftschlüssige Verbindung zwischen den Gehäusen der Überwachungseinrichtungen und den Maschinengehäusen im Wesentlichen ungedämpft auf die Gehäuse der Überwachungseinrichtungen und von diesen auf die Schwingungsaufnehmer übertragen, sodass eine für die Überwachung der Wälzlager zur Lagerung der Rotoren in den Maschinengehäusen ausreichende Messempfindlichkeit sichergestellt werden kann. Die vom Schwingungsaufnehmer erfassten Messdaten werden zur Übertragung zwischengespeichert und an die Auswerteschaltung gesendet, und zwar über ein bestehendes Funknetz, vorzugsweise für mobile Telefone, als drahtlose Übertragungsstrecke, sodass zur Übertragung auf bewährte Konstruktionsmittel und Übertragungsprotokolle zurückgegriffen werden kann, ohne eine gesonderte in ihrer Reichweite beschränkte Funkstrecke aufbauen zu müssen. Der Standort der Auswerteschaltung kann daher unabhängig vom Standort der Produktionsanlage gewählt werden, und zwar mit dem zusätzlichen Vorteil, dass über das Funknetz auch von unterschiedlichen Standorten eine Datenübertragungsstrecke mit der Auswerteschaltung möglich ist. Da die Auswertung der Messdaten in einer von den den einzelnen Maschinen zugeordneten Überwachungseinrichtungen gesonderten Auswerteschaltung durchgeführt wird, der die unverarbeiteten Messdaten übermittelt werden, bleibt der konstruktive Aufwand im Bereich der einzelnen Überwachungseinrichtungen beschränkt. Außerdem müssen keine aufwändigen Verkabelungen vorgesehen werden und stehen der Auswerteschaltung alle unverarbeiteten Messdaten zur Verfügung, was bei einer entsprechenden Speicherung der Messdaten auch eine nachträgliche Auswertung dieser Messdaten nach unterschiedlichen Gesichtspunkten erlaubt.

Damit die für die Überwachung der Wälzlager dienenden Schwingungen der Maschinengehäuse in vorgegebenen Zeitintervallen erfasst werden können, können die einzelnen Überwachungseinrichtungen Zeitglieder aufweisen, von deren zeitlichen Vorgaben abhängig die Messdaten der Schwingungsaufnehmer zur Übermittlung an die Auswerteschaltung abgespeichert werden. Wird dieses Zeitglied über die Steuerschaltung in den einzelnen Überwachungseinrichtungen von der Auswerteschaltung angesteuert, so erübrigt sich eine Synchronisation der Zeitglieder in den Überwachungseinrichtungen. Außerdem ergibt sich die einfache Möglichkeit, bei Bedarf die Abfragezeitspannen für die Messdaten über die gemeinsame Steuereinrichtung zu ändern.

Die Energieversorgung der einzelnen Überwachungseinrichtungen erfolgt vorzugsweise jeweils über wenigstens eine elektrische Versorgungsbatterie, die über die Auswerteschaltung angesteuert werden kann, um die Energieversorgung zur Stromsparung nur bei Bedarf einzuschalten. Das Gehäuse für die Überwachungseinrichtungen kann dabei vorteilhaft von seinem dem Maschinengehäuse zugekehrten Boden abstehenden Abstandhaltern aufweisen, die eine Platine mit einem Messdatenspeicher, den Sende- und Empfangstufen sowie mit der Steuerschaltung auf der vom Maschinengehäuse abgewandten Seite der Versorgungsbatterie tragen. Aufgrund dieser Maßnahme werden die unter Umständen schwingungsempfindlichen Schaltungselemente mit Abstand vom die Schwingungen aufnehmenden Gehäuseboden angeordnet, wobei über die Abstandhalter eine Schwingungsdämpfung erreicht werden kann.

Das Gehäuse für den Schwingungsaufnehmer kann über eine Adapterplatte am Maschinengehäuse kraftschlüssig befestigt werden. Diese Adapterplatte bringt den Vorteil mit sich, dass eine einfache Anpassung an unterschiedliche Geometrien der Maschinengehäuse ermöglicht wird, ohne die Überwachungseinrichtung mit ihrem Gehäuse selbst anpassen zu müssen.

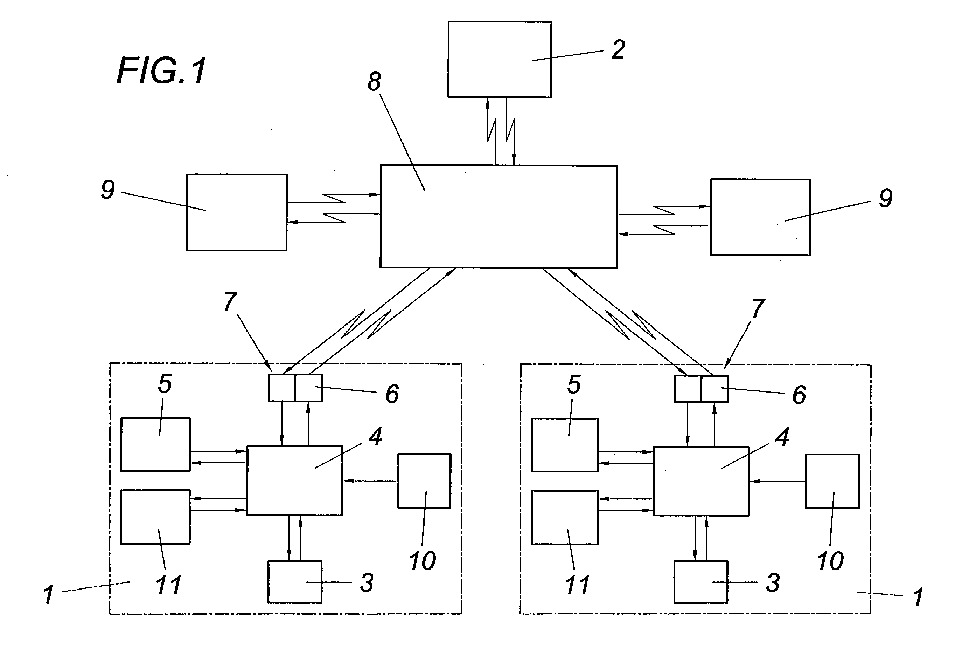

In der Zeichnung ist der Erfindungsgegenstand beispielsweise dargestellt. Es zeigen
- Fig. 1: eine erfindungsgemäße Vorrichtung zum Überwachen der Wälzlager von rotierenden Maschinen einer Produktionsanlage in einem schematischen Blockschaltbild und
- Fig.: 2 eine Überwachungseinrichtung in einem vereinfachten Schnitt.

Eine Vorrichtung zum Überwachen der Wälzlager von rotierenden Maschinen, insbesondere von Elektromotoren, einer Produktionsanlage umfasst den einzelnen Maschinen zugeordnete Überwachungseinrichtungen 1 und eine diesen Überwachungseinrichtungen 1 gemeinsame Auswerteschaltung 2, die gesondert und unabhängig vom Ort der Produktionsanlage angeordnet ist. Von den Überwachungseinrichtungen 1, die übereinstimmend aufgebaut sind, sind allerdings nur zwei angedeutet. Diese Überwachungseinrichtungen 1, die kraftschlüssig mit den Maschinengehäusen, vorzugsweise durch Kleben oder Klemmen, verbunden werden, weisen einen Schwingungsaufnehmer 3 auf, mit dessen Hilfe die Schwingungen des jeweiligen Maschinengehäuses erfasst werden. Die Messdaten der in ihrem zeitlichen Verlauf erfassten Schwingungen werden über eine Steuerschaltung 4 digitalisiert in einen Messdatenspeicher 5 eingelesen. Zur drahtlosen Übermittlung der abgespeicherten Messdaten wird der Messdatenspeicher 5 mittels der Steuerschaltung 4 an eine Sendestufe 6 einer Sende- und Empfangseinheit 7 ausgelesen, über die die einzelnen Überwachungseinrichtungen 1 an ein bestehendes Funknetz 8, vorzugsweise für mobile Telefone, angeschlossen ist, mit dem auch die Auswerteschaltung 2 über eine entsprechende Sende- und Empfangseinheit in Verbindung steht. Durch Steuerbefehle können daher die einzelnen Überwachungseinrichtungen 1 von der Auswerteschaltung 2 zur Übermittlung der Messdaten angesteuert werden, die dann aus den Messdatenspeichern 5 ausgelesen und über das Funknetz 8 an die Auswerteschaltung 2 übermittelt werden. Eine den einzelnen Überwachungseinrichtungen 1 zugehörige Kennung, die mit den Messdaten übertragen wird, sichert eine eindeutige Zuordnung der Messdaten zu den einzelnen zu überwachenden Maschinen. Die übertragenen Messdaten werden auf der Grundlage vorgegebener Auswerteprogramme unter Berücksichtigung ihrer zeitlichen Änderungen in der Auswerteschaltung 2 hinsichtlich des Einflusses einer verschleißbedingten Vergrößerung der wälzlagertypischen Frequenzkomponenten auf die verbleibende Standzeit der Wälzlager der mit den Überwachungseinrichtungen 1 verbundenen Maschinen beurteilt. Diese Auswertung der durch die Auswerteschaltung 2 verarbeiteten, rohen Messdaten, die in der Auswerteschaltung abgespeichert bleiben, stehen dann den Betreibern der Produktionsanlage zur Verfügung, wobei der Zugang zu diesen Auswertungen durch Berechtigte über das Funknetz 8 wieder ortsunabhängig ist. In der Fig. 1 sind zwei Abfrageeinheiten 9 angedeutet.

In den einzelnen Überwachungseinrichtungen 1 sind zu deren Energieversorgung Versorgungsbatterien 10 vorgesehen, die in Abhängigkeit vom Energiebedarf geschaltet werden, um die Energieversorgung der Überwachungseinrichtungen 1 über eine möglichst lange Zeitspanne sicherzustellen. Eine Möglichkeit zum Schalten der Versorgungsbatterien 10 besteht darin, über die Auswerteschaltung 2 entsprechende Steuerbefehle an die einzelnen Überwachungseinrichtungen 1 zu senden. Da die Messdaten lediglich in Zeitabständen zu erfassen sind, werden die Messperioden über Zeitglieder 11 vorgegeben. Diese Zeitglieder 11 bestimmen somit die Messintervalle, nach denen die Messdaten der Schwingungsaufnehmer 3 in die Messdatenspeicher 5 eingelesen werden, und zwar nach einer in der Steuerschaltung 4 durchgeführten Digitalisierung. Das Auslesen der Messdatenspeicher 5 kann vorzugsweise durch einen Abfragebefehl vorgenommen werden, der von der Auswerteschaltung 2 gesendet wird. Mit dieser Ansteuerung der einzelnen Überwachungseinrichtungen 1 können vorteilhaft auch die Zeitglieder 11 beaufschlagt werden, sodass sich eine selbständige Synchronisation der Zeitglieder 11 mit den Zeitvorgaben der Auswerteschaltung 2 ergibt. Zur Sicherheit der Überwachung der Wälzlager der mit den Überwachungseinrichtungen 1 versehenden Maschinen dient auch, dass mit jeder Messdatenübertragung der Batteriezustand an die Auswerteschaltung 2 übertragen wird, sodass zeitgerecht für einen allfälligen Batteriewechsel gesorgt werden kann.

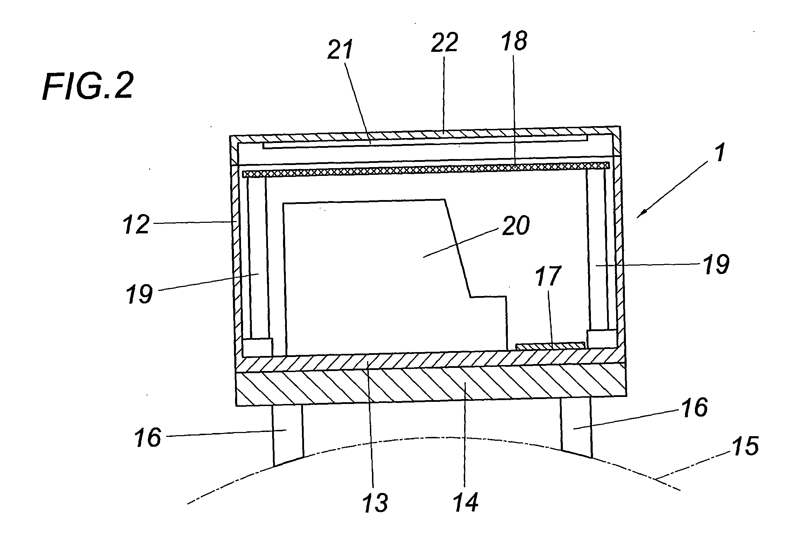

Die Überwachungseinrichtungen 1 selbst weisen ein Gehäuse 12 auf, dessen Boden 13 über eine Adapterplatte 14 kraftschlüssig an eine rotierende Maschine 15 angeschlossen werden kann, die in der Fig. 2 strichpunktiert angedeutet ist. Mit Hilfe von an die Geometrie der Maschine 15 angepassten Stegen 16 der Adapterplatte 14 kann die Überwachungseinrichtung 1 durch ein Kleben oder Klemmen an der Maschine 15 so befestigt werden, dass die Schwingungen des Maschinengehäuses möglichst ungedämpft auf den Boden 13 des Gehäuses 12 übertragen werden. Eine Messplatine 17 mit dem Schwingungsaufnehmer 3 stützt sich starr am Boden 13 des Gehäuses 12 ab, indem die Messplatine 17 am Boden 13 festgeklebt oder angeschraubt wird. Die Platine 18 mit der Steuerschaltung 4, dem Messdatenspeicher 5 sowie dem Zeitglied 11 und der Sende- und Empfangseinheit 7 ist mit Abstand vom Boden 13 auf Abstandhalter 19 angeordnet, wobei über die Abstandhalter 19 eine Dämpfung der vom Boden 13 aufgenommenen Schwingungen in einem Ausmaß erreicht werden kann, das eine Gefährdung der elektronischen Schaltungselemente der Platine 18 ausschließt. Der sich zwischen der Platine 18 und dem Boden 13 ergebende Raum im Gehäuse 12 kann zur Aufnahme einer Batterie 20 genützt werden. Die Antenne 21 für die Sende- und Empfangseinheit 7 kann im Gehäusedeckel 22 untergebracht werden. Das Gehäuse 12 darf daher keine Schirmung der Funksignale ergeben. Aus diesem Grunde wird das Gehäuse 12 mit dem Gehäusedeckel 22 aus einem elektrisch isolierenden Werkstoff gefertigt.

## Patentansprüche

1. Vorrichtung zum Überwachen der Wälzlager von rotierenden Maschinen (15) einer Produktionsanlage, welche Maschinen (15) ein Gehäuse zur Lagerung eines Rotors umfassen, mit den einzelnen Maschinen (15) zugehörigen Überwachungseinrichtungen (1), die jeweils einen Schwingungsaufnehmer (3), eine Sendestufe (6) für die durch den Schwingungsaufnehmer (3) erfassten Messdaten sowie eine über eine Empfangsstufe ansteuerbare Steuerschaltung (4) zur Beaufschlagung der Sendestufe (6) mit den Messdaten aufweisen, und mit einer Auswerteschaltung (2), die mit einer Sendestufe zur drahtlosen Übertragung von Steuersignalen an die ausgewählten Überwachungseinrichtungen
(1) zum Senden der Messdaten versehen und an eine Empfangsstufe für die über eine drahtlose Übertragungsstrecke von den Überwachungseinrichtungen
(1) gesendeten Messdaten angeschlossen ist, **dadurch gekennzeichnet, dass** die Überwachungseinrichtungen (1) von den Maschinen (15) gesonderte Baueinheiten mit einem kraftschlüssig am jeweiligen Maschinengehäuse befestigbaren Gehäuse (12) bilden, an dem sich der Schwingungsaufnehmer (3) starr abstützt, und dass die drahtlose Übertragungsstrecke Teil eines Funknetzes (8) ist, über das die Auswerteschaltung (2) gegebenenfalls mit Abfrageeinheiten (9) in Verbindung steht.

2. Vorrichtung nach Anspruch 1, **dadurch gekennzeichnet, dass** die Überwachungseinrichtungen (1) ein Zeitglied (11) zum Abspeichern der Messdaten des Schwingungsaufnehmers (3) aufweisen.

3. Vorrichtung nach Anspruch 2, **dadurch gekennzeichnet, dass** das Zeitglied (11) über die Steuerschaltung (4) von der Auswerteschaltung (2) ansteuerbar und gegebenenfalls einstellbar ist.

4. Vorrichtung nach einem der Ansprüche 1 bis 3, **dadurch gekennzeichnet, dass** die Überwachungseinrichtungen (1) wenigstens eine über die Auswerteschaltung (2) schaltbare Versorgungsbatterie (20) aufweisen.

5. Vorrichtung nach Anspruch 4, **dadurch gekennzeichnet, dass** die Gehäuse (12) der Überwachungseinrichtungen (1) von ihrem dem Maschinengehäuse zugekehrten Boden (13) abstehende Abstandhalter (19) aufweisen, die eine Platine (18) mit einem Messdatenspeicher (5), den Sende- und Empfangstufen (7) sowie mit der Steuerschaltung (4) auf der vom Maschinengehäuse abgewandten Seite der Versorgungsbatterie (20) tragen.

6. Vorrichtung nach einem der Ansprüche 1 bis 5, **dadurch gekennzeichnet, dass** das Gehäuse (12) der Überwachungseinrichtungen (1) über eine Adapterplatte (14) mit dem Maschinengehäuse kraftschlüssig verbunden ist.
